# EUROPÄISCHE PATENTSCHRIFT

(11) **EP 2 434 358 B1**
(45) Veröffentlichungstag und Bekanntmachung des Hinweises auf die Patenterteilung: **19.07.2017**
(21) Anmeldenummer: 10180074.6
(22) Anmeldetag: 27.09.2010
(51) Int. Cl.: G05B 19/042

(54) **Verfahren zum Betreiben eines redundanten Systems und System**
System and method for operating a redundant system
Procédé de fonctionnement d'un système redondant et système

(43) Veröffentlichungstag der Anmeldung: 28.03.2012
(73) Patentinhaber: Siemens Aktiengesellschaft, 80333 München (DE)
(72) Erfinder: Fichtlscherer, Martin, 92224, Amberg (DE); Gramolla, Tobias, 92245, Kümmersbruck (DE); Maier, Mario, 92266, Ensdorf (DE)

(56) Entgegenhaltungen:
- EP-A1- 1 701 230
- DE-A1-102004 039 698

## Beschreibung

Die Erfindung betrifft ein Verfahren eines redundanten Systems zur Versorgung einer Last mit einer Spannung, wobei über einen ersten Ausgang einer ersten Ausgabebaugruppe eine erste Ausgangsspannung und über einen zweiten Ausgang einer zweiten Ausgabebaugruppe eine zweite Ausgangsspannung zum Ansteuern der Last an diese geschaltet wird.

Des Weiteren betrifft die Erfindung ein System zur redundanten Versorgung einer Last mit einer Spannung, umfassend eine erste Ausgabebaugruppe mit einem ersten Ausgang, welcher über eine erste Verbindung an einen ersten Lastanschluss der Last angeschlossen ist, wobei ein zweiter Lastanschluss der Last über eine zweite Verbindung an einen Masseanschluss der ersten Ausgabebaugruppe angeschlossen ist, wobei diese Anschlussart einen ersten elektrischen Stromweg bildet. Um die Redundanz zu erreichen ist die zweite Ausgabebaugruppe analog zu der ersten Ausgabebaugruppe mit einem zweiten Ausgang ähnlich an der Last angeschlossen, so dass ein zweiter elektrischer Stromweg gebildet wird, das System also durch die Verschaltung der beiden Ausgabebaugruppen redundant aufgebaut ist.

Derartige Verfahren und Systeme oder Baugruppen werden beispielsweise bei digitalen Ausgabebaugruppen angewendet, welche beispielsweise in sicherheitsgerichteten Einrichtungen, vorzugsweise in der Automatisierungstechnik, Anwendung finden. Insbesondere spielt eine Drahtbrucherkennung eine wichtige Rolle. Zum Einen muss die Sicherheit für den Prozess gewährleistet sein zum Anderen muss die Sicherheit für Leib und Leben, beispielsweise von den den Prozess bedienenden Menschen gewährleistet sein. Bei diesen Sicherheitsanwendungen spielt weiterhin die redundante Verschaltung der Ausgabebaugruppen eine weitere wichtige Rolle.

Redundanz bedeutet im Umfeld der Automatisierungstechnik das Vorhandensein funktional gleicher oder vergleichbarer Ressourcen eines technischen Systems, Um einen redundanten Betrieb zu gewährleisten, sind also wenigstens zwei Systeme bzw. zwei Ausgabebaugruppen vorhanden.

Ausgehend von einem redundant verschalteten System von zwei Automatisierungsbaugruppen ist nach dem Stand der Technik bekannt, dass beispielsweise zwei digitale Ausgabebaugruppen zum Treiben einer Last, an der Last mit ihren Ausgängen parallel verschaltet sind, so dass, falls eine Ausgabebaugruppe ausfällt die Stromübernahme für die Last durch die andere Baugruppe gewährleistet ist. Beide Ausgabebaugruppen sind dabei mit einer Drahtbrucherkennung ausgestattet. Für den Fall, dass eine der beiden Baugruppen einen Drahtbruch zur Last erkennen sollte, meldet sie dies, über eine separate Kommunikationsschnittstelle zwischen den redundant verschalteten Ausgabebaugruppe, der anderen Baugruppe. Es ist dabei von Nachteil, dass zwischen den Baugruppen eine zusätzliche Verdrahtung für die Kommunikation aufgebracht werden muss.

Auch ist aus der EP 1 701 230 A1 eine Vorrichtung und ein Verfahren zur Drahtbruchprüfung bekannt, bei welcher/welchem zyklisch, abwechselnd der erste elektrische Stromweg und dann der zweite elektrische Stromweg unter Zuhilfenahme von einem Treiberbaustein und Entkopplungsdioden geprüft wird.

Da die genannten Baugruppen auch mit einer Betriebsspannung versorgt werden müssen, ist es weiterhin von Nachteil, dass bei der redundanten Verschalung, insbesondere bei Schwankungen der Versorgung, es dazu kommen kann, dass vorzeitig eine Drahtbrucherkennung diagnostiziert werden kann, obwohl kein wirklicher Drahtbruch vorliegt.

Es ist Aufgabe der vorliegenden Erfindung, bei redundant verschalteten Ausgabebaugruppen auf eine zusätzliche Verdrahtung zur Kommunikation zwischen den beiden Baugruppen zu verzichten.

Ein Verfahren zum Betrieb eines redundanten Systems zur Versorgung einer Last mit einer Spannung, wobei über einen ersten Ausgang einer ersten Ausgabebaugruppe eine erste Ausgangsspannung und über einen zweiten Ausgang eine zweite Ausgabebaugruppe an eine zweite Ausngsspannung zum Ansteuern der Last an diese parallel geschaltet wird, löst die eingangs genannte Aufgabe, durch die Merkmalskombination des Anspruchs 1. Das Verfahren wird vorzugsweise bei einem System mit zwei Ausgabebaugruppen, welche mit ihrem jeweiligen Ausgang parallel an der Last verschaltet sind, angewendet. In einem ersten Schritt wird in der ersten Ausgabebaugruppe über ein zu dieser Ausgabebaugruppe zugehöriges Messmittel eine Prüfung eines ersten elektrischen Stromweges von dem ersten Ausgang über die Last durchgeführt, und in der zweiten Ausgabebaugruppe wird über ein zu dieser Ausgabebaugruppe zugehöriges Messmittel eine Prüfung eines zweiten elektrischen Stromweges von dem zweiten Ausgang über die Last durchgeführt, für einen zweiten Schritt gilt: Ergibt die Prüfung, dass ein Messwert des Stromes des jeweiligen elektrischen Stromweges unter einem Grenzwert liegt, so wird die Ausgangsspannung der Ausgabebaugruppe, bei welcher durch das Prüfergebnis die Unterschreitung des Grenzwertes festgestellt wurde, abgeschaltet. Weiterhin wird in einem dritten Schritt mittels eines Rücklesesignals, welches über einen Rückleseeingang eingelesen wird, welcher mit dem Ausgang verbunden ist, wobei mittels dieses Rückleseeingangs in der Ausgabebaugruppe, in welcher die Ausgangsspannung abgeschaltet wurde, ein Binärtest durchgerührt.

Der Binärtest liefert eine logische Eins, wenn an dem Ausgang noch eine Spannung anliegt, und eine logische Null, wenn an dem Ausgang keine Spannung anliegt. Dabei wird in einem nächsten Schritt ein Testergebnis dieses Rücklesesignals ausgewertet, bei dem Testergebnis "0" wird eine Fehlermeldung erzeugt und bei dem Testergebnis "1" wird der Binärtest für eine vorgebbare Zeitdauer einer Wartezeit zyklisch fortgeführt, wobei innerhalb der Zeitdauer der Wartezeit die Ausgabebaugruppe mit der noch eingeschalteten Ausgangsspannung derart betrieben wird, dass ihre Ausgangsspannung abgeschaltet wird, wobei dieses Abschalten durch die Ausgabebaugruppe, welche den Binärtest durchführt, registriert, und diese daraufhin ihre Ausgangsspannung wieder einschaltet und dadurch über den an ihrem Ausgang angeschlossenen elektrischen Stromweg die Versorgung der Last übernimmt, wobei mit dem dieser Ausgabebaugruppe zugehörigen Messmittel geprüft wird, ob ein Strom fließt und für den Fall, dass kein Strom fließt, eine Fehlermeldung erzeugt wird.

Dieses Verfahren wird mit Vorteil eingesetzt um eine fehlerhafte Diagnose eines Drahtbruches bei redundant betriebenen Baugruppen zu vermeiden. Beilspielsweise kann es bei unterschiedlichen Lastspannungen, kleinen Lastströmen, unabhängig redundanten Netzteilen, mögliche Spannungsabfälle an den Versorgungsleitungen, dazu kommen, dass eine Drahtbrucherkennung bzw. eine Fehlermeldung irrtümlich erzeugt wird. Bei geringen Lastströmen oder beispielsweise unterschiedlichen Versorgungsspannungen kann es zur unterschiedlichen Stromverteilung zwischen den beidan Baugruppen auf den beiden elektrischen Stromwegen kommen.

Diese elektrischen Stromwege sind nun aber redundant, vorzugsweise parallel geschaltet. Sollte nun aber auf einen der elektrischen Stromwege ein Strom gemessen werden, wobei der Messwert dieser Strommessung einen vorgegebenen Grenzwert unterschreitet, so könnte irrtümlicher Weise bereits eine Fehlermeldung, welche aussagt, dass ein Drahtbruch vorliegt, ausgegeben werden. Diese Fehlermeldung wurde nach dem erwähnten Stand der Technik über eine gesonderte Kommunikationsverbindung jeweils der anderen Baugruppe mitgeteilt, nun soll aber erfindungsgemäß auf diese Kommunikationsverbindung zwischen den beiden Ausgabebaugruppen verzichtet werden.

Verfahrensgemäß wird das erreicht dass bei der ersten Prüfung des Stromes ein Messwert bereitgestellt wird, wobei der Messwert den jeweiligen Strom durch den elektrischen Stromweg, welcher durch die jeweilige Baugruppe definiert ist, wiedergibt. Liegt der so ermittelte Strom unter einem bestimmten Grenzwert, so könnte prinzipiell ein Drahtbruch oder ein Fehler der elektrischen Verbindung für den jeweiligen Stromweg vorliegen. Ohne dies de jeweiligen anderen Baugruppe über eine zusätzliche Kommunikationsverbindung mitzuteilen, schaltet die Baugruppe, bei welcher durch das Prüfergebnis die Unterschreitung des Grenzwertes festgestellt wurde, ihre Ausgangsspannung ab.

Um dieses Ergebnis zu verifizieren und um festzustellen, ob wirklich ein Drahtbruch vorliegt, wird in der Baugruppe, in welcher das Prüfergebnis ergeben hat, dass die Unterschreitung eines Grenzwertes vorliegt, ein Binärtest durchgeführt. Der Binärtest entspricht einer Abtastung des jeweiligen Ausgangs auf eine vorliegende Spannung.

Da die beiden Ausgänge der ersten und zweiten Ausgabebaugruppe parallel an der Last verschaltet sind, kann in der Baugruppe, in welcher der Binärtest abläuft, nun festgestellt werden, ob der elektrische Stromweg zumindest bis zur Last von dieser Baugruppe noch in Ordnung ist, denn durch die Parallelschaltung der beiden Ausgabebaugruppen liegt die Ausgangsspannung der anderen Baugruppe über diesen elektrischen Stromweg jetzt auch am Ausgang des Baugruppe mit der vermeintlichen Grenzwertunterschreitung an.

Sollte die Leitung intakt sein, so wird über den Rückleseeingang eine logische "1" rückgeliefert, sollte die Leitung defekt sein so wird eine logische "0" zurückgeliefert. Bei dem Testergebnis "0" kann sodann mit Sicherheit gesagt werden, dass ein Drahtbruch vorliegt und es wird eine Fehlermeldung erzeugt. Diese Fehlermeldung wird üblicherweise dazu benutzt, eine die Sicherheit betreffende Funktion eines solchen redundanten Systems zu aktivieren. Durch diese Art der gegenseitigen Abtastung kann mit Vorteil auf eine zusätzliche Kommunikationsleitung zwischen den beiden Baugruppen verzichtet werden.

In einer weiteren vorteilhaften Ausgestaltung des Verfahrens wird die Prüfung des jeweiligen elektrischen Stromweges mittels des zugehörigen Messmittels wechselseitig durchgeführt. Ähnlich einem Flip Flop wird mit einer vorgebbaren Taktrate die Prüfung, des Messwertes des Stromes des jeweiligen elektrischen Stromweges wechselseitig durchgeführt. Die vorgebbare Zeitspanne für diese wechselseitige Prüfung klein genug gewählt, so wird wiederum die Sicherheit eines redundant betriebenen Systems zur Versorgung einer Last erhöht.

Um Fehlerdiagnosen zu vermeiden und die Sicherheit weiter zu erhöhen, wird ebenfalls wechselseitig in einer der Ausgabebaugruppen die Prüfung mittels des Messmittels und in der jeweils anderen Ausgabebaugruppe der Binärtest durchgeführt.

Um einen möglichen Drahtbruch bis zur Last und auch über die Last hinweg zu erkennen, wird die Prüfung derart durchgeführt, dass durch die Prüfung des Stromes über den ersten bzw. zweiten elektrischen Stromweg eine Drahtbruchprüfung einer ersten Verbindung bzw. einer dritten Verbindung bis zu einem ersten Lastanschluss über die Last hinweg und einer zweiten Verbindung bzw. einer vierten Verbindung, welche an einem zweiten Lastanschluss angeschlossen sind, durchgeführt wird.

Zusammenfassend kann gesagt werden, dass wenn eine Last durch ein redundant betriebenes System mit zwei Ausgabebaugruppen eingeschaltet werden soll, beide Baugruppen zunächst ihren Ausgang aktiv schalten. Dabei führen beide Ausgabebaugruppen unabhängig voneinander eine Drahtbruchprüfung, vorzugsweise durch Strommessung, durch. Insbesondere bei geringen Lastströmen bzw. unterschiedlichen Versorgungsspannungen kann es zu einer unterschiedlichen Stromverteilung zwischen den beiden Ausgabebaugruppen kommen. Dies kann dazu führen, dass die erste Ausgabebaugruppe den gesamten Strom übernimmt und in der zweiten Ausgabebaugruppe kein Strom mehr fließt. Daraufhin schaltet die zweite Ausgabebaugruppe ihren Ausgang ab und "liest" trotz abgeschaltetem Treiber eine logische "1" zurück, d.h. die erste Ausgabebaugruppe ist eingeschaltet und es liegt kein Fehler vor. Dennoch liest die zweite Ausgabebaugruppe nun ständig über ihren Ausgang einen logischen Wert zurück und wartet eine bestimmte Zeit auf einen Abschalttest oder, wie der Fachmann sagt, einen Dunkeltest der ersten Baugruppe. Innerhalb dieser bestimmten festgelegten Zeit führt die erste Baugruppe also einen sogenannten Dunkeltest durch. Da die zweite Baugruppe ständig den Ausgang zurückliest, erkennt sie dieses Ausschalten und schaltet ihren Ausgang ein. Würde ein wirklicher Drahtbruch vorliegen, so würde auch nach der Übernahme der Last der jeweiligen Baugruppe kein Strom fließen und die jeweilige Baugruppe kann einen wirklichen Drahtbruchfehler melden.

Die eingangs genannte Aufgabe wird auch durch ein System zur redundanten Versorgung einer Last mit einer Spannung, umfassend eine erste Ausgabebaugruppe mit einem ersten Ausgang, welcher über eine erste Verbindung an einen ersten Lastanschluss der Last angeschlossen ist, wobei ein zweiter Lastanschluss der Last über eine zweite Verbindung an einen Masseanschluss der ersten Ausgabebaugruppe angeschlossen ist, wobei diese Anschlussart einen elektrischen Stromweg bildet, eine zweite Ausgabebaugruppe mit einem zweiten Ausgang, welcher über eine dritte Verbindung an der ersten Lastanschluss der Last angeschlossen ist, und der zweite Lastanschluss über eine vierte Verbindung an einen Masseanschluss der zweiten Ausgabebaugruppe angeschlossen ist, wobei diese Anschlussart einen zweiten elektrischen Stromweg bildet, gelöst. Dabei ist es vorzugsweise erforderlich, dass jede dieser Ausgabebaugruppen je ein Messmittel zur Prüfung eines Stromflusses über den ersten bzw. den zweiten elektrischen Stromweg und zur Bereitstellung eines Messwertes aufweist, weiterhin ist je ein Auswertemittel zum Auswerten des Messwertes vorhanden, weiterhin ist jede Ausgabebaugruppe mit je einem Schaltmittel zum Schalten einer ersten Ausgangsspannung an den ersten Ausgang bzw. einer zweiten Ausgangsspannung an den zweiten Ausgang ausgestaltet, wobei je ein Rückleseeingang, welcher mit dem ersten Ausgang bzw. dem zweiten Ausgang verbunden ist, vorhanden ist, wobei das jeweilige Auswertemittel den jeweiligen Rückleseeingang aufweist, und weiterhin dazu ausgestaltet ist, einen Binärtest durchzuführen, welcher eine logische "1" liefert, wenn am Ausgang eine Spannung anliegt, und eine logische "0" liefert, wenn am Ausgang keine Spannung anliegt, bei dem Testergebnis "0" wird eine Fehlermeldung erzeugt und bei dem Testergebnis "1" wird der Binärtest für eine vorgebbare Zeitdauer einer Wartezeit zyklisch fortgeführt, wobei innerhalb der Zeitdauer der Wartezeit die Ausgabebaugruppe mit der noch eingeschalteten Spannung dazu ausgestaltet ist, dass ihre Ausgangsspannung abgeschaltet wird, wobei die Ausgabebaugruppe, welche den Binärtest durchführt, dazu ausgestaltet ist dies zu registrieren und daraufhin ihre Ausgangsspannung wieder einschaltet und dadurch die Versorgung der Last übernimmt, wobei mit dem dieser Ausgabebaugruppe zugehörigen Messmittel geprüft wird, ob ein Strom fließt, und für den Fall, dass kein Strom fließt eine Fehlermeldung erzeugt wird.

Durch diese Ausgestaltung eines redundanten Systems aus mindestens zwei Ausgabebaugruppen kann für eine Drahtbrucherkennung mit besonderem Vorteil auf eine zusätzliche Kommunikation zwischen den beiden Ausgabebaugruppen verzichtet werden. Es tritt der Effekt auf, dass aufgrund der besonderen Ausgestaltung des Systems sich die beiden Baugruppen über die vorhandenen an die Last angeschlossenen Stromwege abtasten können.

Nach einer vorteilhaften Ausgestaltung des Systems ist das Schaltmittel in Verbindung mit dem Auswertemittel derart ausgestaltet, dass das Abschalten der Ausgangsspannung einen zeitlich vorbestimmten Verlauf folgt. Zu den bereits erwähnten Vorteil, dass auf eine zusätzliche Kommunikationsleitung verzichtet werden kann, ist aufgrund des zeitlich bekannten/vorbestimmten Ablaufs der Schaltvorgänge in jeder der Baugruppen es nicht mehr erforderlich eine Drahtbruchüberwachung der einzelnen Baugruppen, beispielsweise von einem übergeordneten Leitsystem, ständig zu pollen, da der ersten Baugruppe ein Zeitfenster zwischen zwei Abschalttests der zweiten Baugruppe bekannt ist. Vorteilhafter Weise kann, wenn kein Polling auf Drahtbruch erforderlich ist, die Baugruppe andere Schaltungstests (z.B. Überlastüberwachung, Dunkeltest, Bitmustertest, insbesondere vorzugsweise bei fehlersicheren Baugruppen) durchführen.

Ein deterministisches Verhalten, also die Kenntnis davon, dass ein zeitlich bekanntes oder vorbestimmtes Ablaufverhalten in einer der Baugruppen bekannt ist, wobei zukünftige Ereignisse durch Vorbedingungen eindeutig festgelegt sind, wird bei den Ausgabebaugruppen vorzugsweise dadurch erreicht, dass das Auswertemittel dazu ausgestaltet ist, nach einem zeitlich vorbestimmten Verhalten die ihm zugeordneten Schalter derartig zu schalten, dass das Ausschalten einer Spannung am Ausgang für einen sogenannten Dunkeltest genutzt wird, wobei ein bekannter Status der jeweiligen anderen Baugruppe als bekannt vorausgesetzt wird. Wenn dieser als bekannt vorausgesetzte Status dennoch nicht vorherrscht, so kann ein Rückschluss auf ein Fehlverhalten durchgeführt werden.

Die Zeichnung zeigt ein Ausführungsbeispiel eines Systems zur redundanten Versorgung einer Last, dabei ist in:
- FIG 1: ein System mit zwei redundant verschalteten Ausgabebaugruppen, in
- FIG 2: eine Detaildarstellung der Ansteuerung eines Ausgangs und in
- FIG 3: ein zeitliches Verhalten der redundant verschalteten Ausgabebaugruppen dargestellt.

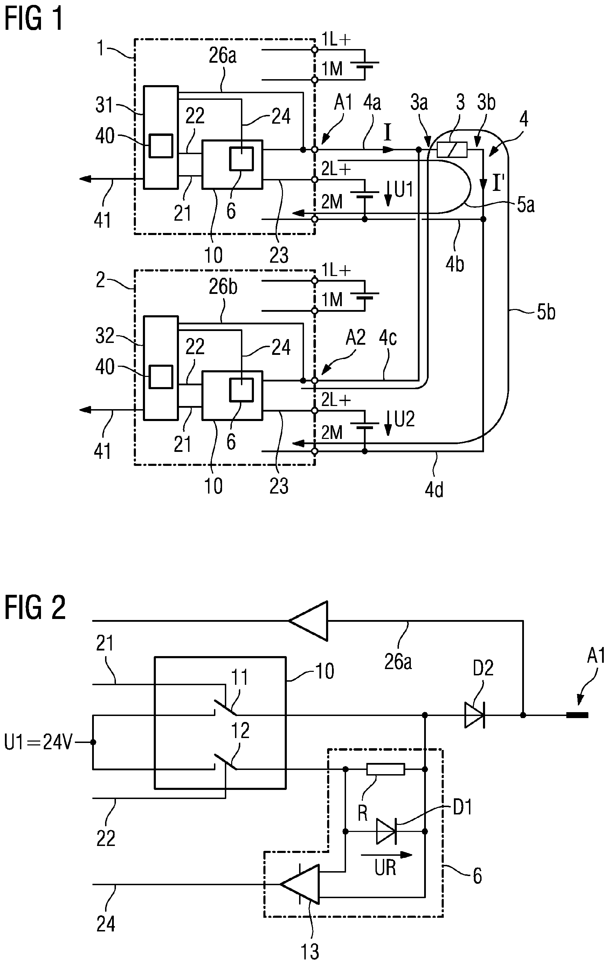

FIG 1 zeigt in schematischer Darstellung eine erste Ausgabebaugruppe 1 mit einem ersten Ausgang A1 und eine zweite Ausgabebaugruppe 2 mit einem zweiten Ausgang A2, welche zu einem System zur redundanten Versorgung einer Last 3 zusammengeschaltet sind. Die Ausgabebaugruppen 1,2 sind mit ihren Ausgängen A1,A2 an der Last 3 redundant, parallel verschaltet. Die Last 3 kann beispielsweise ein Relais, eine LED, ein Feuermelder oder allgemein eine Komponente für eine sicherheitstechnische Anwendung sein. Zu der Last 3 führt eine elektrische Verbindung, welche sich für einen ersten elektrischen Stromweg 5a in eine erste Verbindung 4a und eine zweite Verbindung 4b aufteilt. Die erste Verbindung 4a verbindet den Ausgang A1 mit einem ersten Lastanschluss 3a der Last 3, die zweite Verbindung 4b verbindet einen zweiten Lastanschluss 3b mit einem Masseanschluss 2M der Ausgabebaugruppe 1.

Mit einer dritten Verbindung 4c und einer vierten Verbindung 3 4d wird ein zweiter elektrischer Stromweg 5b über die Last 3 geschaffen, wobei an den zweiten Anschluss A2 die dritte Verbindung 4c angeschlossen ist, welche ebenfalls an dem ersten Lastanschluss 3a angeschlossen ist. Um den Kreis für den zweiten elektrischen Stromweg 5b zu schließen ist die vierte Verbindung 4d mit einem ersten Ende an einen Masseanschluss 2M der zweiten Ausgabebaugruppe 2 und mit einem zweiten Ende an dem zweiten Lastanschluss 3b der Last 3 angeschlossen. Diese Anschlussart stellt eine redundante Verschaltung dar. Durch diese redundante Parallelschaltung ist gewährleistet, dass selbst wenn eine Ausgabebaugruppe 1,2 ausfallen sollte, ein Strom I' durch die Last 3 von der jeweils anderen Baugruppe 1,2 übernommen werden kann.

Die Ausgabebaugruppen 1,2 weisen jeweils Anschlüsse für eine Betriebsspannung der Ausgabebaugruppen 1,2 auf. Diese Betriebsspannungsanschlüsse 1L+,1M sind jeweils an eine Betriebsspannungsquelle angeschlossen. Da die Ausgabebaugruppen 1,2 in ihrem Aufbau identisch ausgelegt sind, wird nachfolgend der prinzipielle innere Aufbau der Ausgabebaugruppe 1,2 am Beispiel der ersten Ausgabebaugruppe 1 erläutert.

Die erste Ausgabebaugruppe 1 weist zum Schalten des ersten Ausgangs A1 ein Schaltmittel 10 auf. Der innere Aufbau des Schaltmittels 10 ist in FIG 2 näher beschrieben. Im Schaltmittel 10 ist zusätzlich ein Messmittel 6 zur Messung eines Stromes I anbeordnet. Zur Steuerung des Schaltmittels 10 weist die erste Ausgabebaugruppe 1 ein erstes Auswertemittel 31 auf, welches dazu ausgestaltet ist, einen Diagnosefehler 40 innerhalb des ersten Steuermittels 31 zu vermerken und bei Betätigung des Diagnosefehlers 40 eine Störmeldung 41 abzugeben. Das Schaltmittel 10 weist einen ersten Eingang 21, einen zweiten Eingang 22 und einen dritten Eingang 23 auf. Der erste Eingang 21 dient der Ansteuerung eines ersten Schalters 11 (siehe FIG 2), der zweite Eingang 22 dient der Ansteuerung eines zweiten Schalters 12 (siehe FIG 2) und der dritte Eingang 23 dient dem Anschluss einer ersten Spannung U1, welche über das Schaltmittel 10 über den Ausgang A1 an die Last 3 geschaltet wird. Ein aufgrund der angeschalteten ersten Spannung U1 fließender Strom I kann vom ersten Ausgang A1 über die Last 3 zu einem Masseeingang 2M der ersten Ausgabebaugruppe 1 und/oder einem Masseeingang 2M der zweiten Ausgabebaugruppe 2 abfließen. Diese Verschaltung stellt die redundante Verschaltung dar.

Ein Diagnoseausgang 24 des Schaltmittels 10 ist mit dem ersten Auswertemittel 31 verschaltet und kann somit dem Auswertemittel 31 mitteilen, ob es einen Diagnosefehler 40 erkannt hat, der sodann im ersten Auswertemittel 31 vermerkt wird. Mit dieser Ausgestaltung der ersten Ausgabebaugruppe 1 kann ein Verfahren zum Erkennen eines Drahtbruches der elektrischen Verbindung 4 für die Last 3, wobei über den ersten Ausgang A1 der ersten Ausgabebaugruppe 1 die erste Spannung U1 und über den zweiten Ausgang A2 der zweiten Ausgabebaugruppe 2 die zweite Spannung U2 zum Ansteuern der Last 3 bereitgestellt wird, durchgeführt werden.

Eine Prüfung des ersten elektrischen Stromweges 5a erfolgt in der ersten Ausgabebaugruppe 1 über den ersten Ausgang A1, wobei in der ersten Ausgabebaugruppe 1 der Strom I ausgewertet und ein daraus gewonnener Messwert einem Prüfkriterium unterzogen wird, wobei ein Erfüllen des Prüfkriteriums zunächst in der ersten Ausgabebaugruppe 1 innerhalb des ersten Auswertemittels 31 als Diagnosefehler 40 vermerkt wird.

Zusätzlich ist das erste Auswertemittel 31 mit einem Rückleseeingang 26a verbunden, wobei der Rückleseeingang 26a an den ersten Anschluss A1 angeschlossen ist. Bezogen auf die zweite Ausgabebaugruppe 2 ist ein Rückleseeingang 26b mit dem zweiten Ausgang A2 und dem zweiten Auswertemittel 32 verbunden.

Mittels des jeweiligen Rückleseeingangs 26a,26b wird in der jeweiligen Ausgabebaugruppe 1,2, ein an den jeweiligen Ausgängen A1,A2 vorliegendes Signal zurückgelesen.

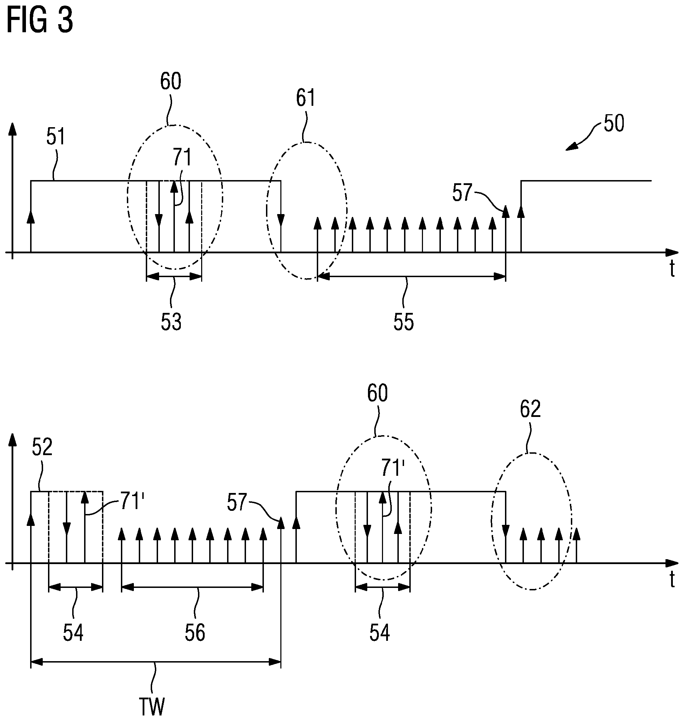

Dabei ist das jeweilige Auswertemittel 31,32 mit dem jeweiligen Rückleseeingang 26a,26b dazu ausgestaltet, einen Binärtest durchzuführen, welcher eine logische "1" liefert, wenn am Ausgang A1,A2 eine Spannung anliegt. Eine logische "0" würde der Rückleseeingang 26a,26b liefern, wenn am Ausgang A1,A2 keine Spannung anliegt. Bei einem Testergebnis "0" wird eine Fehlermeldung erzeugt und bei einem Testergebnis "1" wird der Binärtest für eine vorgebbare Zeitdauer einer Wartezeit TW (siehe FIG 3) zyklisch fortgeführt.

Das Verfahren zum Betreiben eines redundanten Systems zur Versorgung der Last 3 mit einer Spannung wird folgendermaßen ausgeführt: Über den ersten Ausgang A1 wird die erste Ausgangsspannung U1 und über den zweiten Ausgang A2 wird die zweite Ausgangsspannung U2 zum Ansteuern der Last eingeschaltet. In der ersten Ausgabebaugruppe 1 und der zweiten Ausgabebaugruppe 2 wird über ein zu der jeweiligen Ausgabebaugruppe 1,2 zugehöriges Messmittel 6 jeweils eine Prüfung des ersten elektrischen Stromweges 5a bzw. des zweiten elektrischen Stromweges 5b durchgeführt.

Ergibt die Prüfung, dass ein Messwert des Stromwertes des jeweiligen elektrischen Stromweges 5a,5b unter einem Grenzwert liegt, so wird die Ausgangsspannung U1,U2 der Ausgabebaugruppe 1,2, bei welcher das Prüfergebnis die Unterschreitung des Grenzwertes festgestellt wurde, abgeschaltet.

Mittels des Rückleseeingangs 26a,26b und dem Auswertemittel 31,32 wird nun an dem abgeschalteten Ausgang ein Binärtest durchgeführt, welcher eine logische "1" liefert, wenn an diesem Ausgang noch eine Spannung anliegt und eine logische "0" liefert wenn an diesem Ausgang keine Spannung mehr anliegt.

Sollte das Testergebnis eine "0" ergeben haben, so wird eine Fehlermeldung erzeugt und es kann mit Sicherheit gesagt werden, dass ein Drahtbruch vorliegt.

Sollte aber das Testergebnis eine will, ergeben haben, so liegt an dem jeweiligen Ausgang, an welchem der Binärtest durchgeführt wird, noch eine Spannung durch die redundante Verschaltung der jeweiligen anderen Baugruppe an diesem Ausgang an.

Der Binärtest wird nun für eine vorgebbare Zeitdauer einer Wartezeit TW zyklisch fortgesetzt, wobei innerhalb der Zeitdauer der Wartezeit TW die Ausgabebaugruppe mit der noch eingeschalteten Ausgangsspannung derart betrieben wird, dass ihre Ausgangsspannung U1,U2 abgeschaltet wird. Dieses Abschalten wird durch die Ausgabebaugruppe 1,2, welche den Binärtest durchführt, registriert und daraufhin schaltet sie ihre Ausgangsspannung U1,U2 wieder ein. Damit übernimmt sie die Versorgung der Last 3. Mit dem der jeweiligen Ausgabebaugruppe 1,2 zugehörigen Messmittel 6 wird geprüft, ob noch ein Strom fließt und für den Fall, dass kein Strom fließt, wird eine Fehlermeldung erzeugt.

Das redundante System arbeitet nach dem Prinzip, dass wenn einer der beiden Ausgangsspannungen U1,U2 gänzlich abgeschaltet wird, ein Stromfluss nur noch durch die jeweils eingeschaltete Baugruppe erfolgen kann. Das bedeutet aber, wenn weiterhin ein Stromfluss vorliegt, der groß genug ist, so kann kein Drahtbruch vorliegen.

Dieses Verfahren bzw. die Ausgestaltung der Ausgabebaugruppen für das redundante System hat den Vorteil, dass geringe Lastströme bzw. unterschiedliche Versorgungsspannungen tolerierbar sind. Es kann zur unterschiedlichen Stromverteilung zwischen beiden Ausgabebaugruppen 1,2 kommen und dies kann dazu führen, dass beispielsweise in der ersten Ausgabebaugruppe 1 eine Grenze für die Drahtbrucherkennung unterschritten wird und somit fälschlicherweise eine entsprechende Diagnose abgesetzt werden würde.

Gemäß FIG 2 ist das aus FIG 1 bekannte Schaltmittel 10, der erste Ausgang A1 und das Messmittel 6 im Detail dargestellt. Dabei ist über eine elektrische Verbindung der erste Ausgang A1 mit einer Leitung und einem Signalverstärker verbunden so dass hier ein Rückleseeingang 26a gebildet ist. Das Schaltmittel 10 weist einen ersten Schalter 11 und einen zweiten Schalter 12 auf. Der erste Schalter 11 wird über einen ersten Eingang 21 derart angesteuert, dass er von einer geöffneten Position in eine Schließposition übergehen kann. In dieser Schließposition schaltet er die erste Spannung U1, beispielsweise 24 Volt an den Ausgang A1. Der zweite Schalter 12 kann entsprechend über einen zweiten Eingang 22 angesteuert werden, so dass auch er von einer Öffnungsposition in eine Schließposition wechselt und ebenfalls die erste Spannung U1 durchschaltet. Der zweite Schalter 12 sorgt dafür, dass ein Widerstand R, welcher Bestandteil des Messmittels 6 ist, in den Strompfad zum ersten Ausgang A1 geschaltet wird. In dieser Reihenschaltung des Widerstandes R und des Ausgangs A1 kann an einem Widerstand R eine Spannung UR abfallen. Die Spannung UR wird einem Vergleicher 13 zugeführt, welcher die Spannung UR bzw. den durch den Widerstand fließenden Strom auswertet und ihm einen Prüfkriterium unterzieht. Als Prüfkriterium wird eine Unterschreitung des Messwertes des Spannungsabfalls UR unter einem bestimmbaren Grenzwert genutzt. Entspricht der Spannungsabfall UR nicht dem zuvor eingestellten Grenzwert, so ist der Vergleicher 13 dazu ausgestaltet, über einen Diagnoseausgang 24 die aus FIG 1 bekannte Diagnosemeldung 40 abzusetzen.

Um bei der redundanten Verschaltung der Ausgabebaugruppen 1,2 die Ausgänge A1,A2 von einander zu entkoppeln, ist in dem Ausgangspfad des ersten Ausgang A1 eine zweite Diode D2 angeordnet.

Gemäß FIG 3 ist ein Ablaufdiagramm 50 für die zeitlichen Verläufe der Spannungsverläufe 51 am ersten Ausgang A1 und des Spannungsverlaufes 52 am zweiten Ausgang A2 der jeweiligen Ausgabebaugruppen 1,2 dargestellt. Die Verläufe sind über die Zeit t abgebildet. Die beiden eingekreisten Bereiche 60 stellen jeweils einen Fehlerfall dar. Bei den eingekreisten Bereichen 61 und 62 handelt es sich um eine Testabschaltung 61 der ersten Baugruppe 1 und eine estabschaltung 62 der zweiten Ausgabebaugruppe 2.

Ausgehend von einem Ruhezustand schalten beide Ausgabebaugruppen 1,2 ihre jeweilige Spannung an ihre Ausgänge A1,A2. Der Spannungsverlauf 51 am ersten Ausgang A1 und der Spannungsverlauf 52 am zweiten Ausgang A2 steigt beispielsweise von 0 Volt auf 24 Volt an. Beispielhaft ist in dem Spannungsverlauf 52 schon nach einiger Zeit eine gestrichelte Linie zu sehen. Diese gestrichelte Linie hat einen Ausdehnungsbereich 54, welcher eine Prüfung mit dem Messmittel 6 der zweiten Baugruppe 2 entspricht. In dieser Zeitspanne 54 wird in der zweiten Baugruppe der Strom mittels des Messmittels 6 erfasst. Für diesen beispielhaften Fall sei angenommen dass zwar der Spannungsverlauf 52 auf 24 Volt gestiegen ist, aber der Stromfluss durch den zweiten elektrischen Stromweg nicht ausreichend war und dadurch eine zweite Fehlermeldung 71' in der zweiten Ausgabebaugruppe 2 hervorgerufen wird. Für eine Überprüfung dieser zweiten Fehlermeldung 71' wird die Spannung an der zweiten Ausgabebaugruppe A2 gänzlich abgeschaltet. Dies bedeutet, dass der Spannungsverlauf 52 nun wieder von den beispielsweise 24 Volt auf 0 Volt absinkt. Mit dem Abschalten der zweiten Ausgangsspannung U2 startet ein Binärtest mit der Zeitdauer 56 in der zweiten Ausgabebaugruppe 2. Dieser Binärtest ist in dem Ablaufdiagramm durch aufeinanderfolgende nach oben gerichtete Pfeile dargestellt, welches bedeutet, dass hier zyklisch immer wieder über einen entsprechenden Rückleseeingang 26a,26b an dem jeweiligen Ausgang geprüft wird, ob eine Spannung anliegt oder nicht.

Analog zu dem oben gesagten ist in dem Spannungsverlauf 51 am ersten Ausgang 51 eine gestrichelte Linie mit einem Ausdehnungsbereich 53 dargestellt, in welchem eine Prüfung mit dem Messmittel 6 der ersten Ausgabebaugruppe 1 stattfindet. Der Pfeil mit dem Bezugszeichen 71 stellt demnach eine erste Fehlermeldung 71 dar.

Während der Zeitdauer 56 kann in dem Spannungsverlauf 51 ein möglicher Drahtbruchfehler auftreten. Würde während des Binärtestes 56 der zweiten Ausgabebaugruppe 2 die Spannung U1 an der ersten Ausgabebaugruppe 1 auch auf "0" sinken, so würde auch der Binärtest während der Zeit 56 eine "0" liefern und das System kann eine Drahtbruchfehlermeldung absetzen.

Der Fehlerfall 60 im ersten Spannungsverlauf 51 soll nun aber nicht weiter berücksichtigt werden für die weitere Beschreibung des Ablaufdiagramms wird davon ausgegangen, dass der Fehlerfall 60 im Spannungsverlauf 51 nicht aufgetreten ist.

Nach Ablauf einer Wartezeit TW würde der Binärtest 56 in der zweiten Ausgabebaugruppe 2 beendet werden und es würde auch ein Fehler gemeldet werden. Da aber noch innerhalb der Wartezeit TW die erste Ausgabebaugruppe A1 einen Dunkeltest durchführt, also eine Testabschaltung 61 der ersten Ausgabebaugruppe 1, wobei mit dieser Testabschaltung die erste Spannung U1 von beispielsweise 24 Volt auf 0 Volt abgeschaltet wird. Diese Testabschaltung 61 wird durch die zweite Ausgabebaugruppe 2, über den Rückleseeingang 26b, registriert und die zweite Ausgabebaugruppe 2 reagiert mit einer Lastübernahme 57. Dabei schaltet sie ihre Ausgangsspannung U2 wieder an die Last 3 an. Das Ein- und Abschalten der Spannungsverläufe 51,52 ist jeweils durch einen kleinen Pfeil in der steigenden Flanke bzw. in der fallenden Flanke angedeutet. Da nun die erste Ausgabebaugruppe 1 ihre erste Ausgangsspannung U1 abgeschaltet hat, kann diese nun einen Binärtest mit der Zeitdauer 55 durchführen. Dieses Ab- und Einschalten der Ausgangsspannungen wird wechselseitig durchgeführt. Das bedeutet, dass wenn eine Ausgabebaugruppe ihren Abschaltest 61, 62 durchführt, so hat die jeweils andere Ausgabebaugruppe ihre Ausgangsspannung wieder einzuschalten.

In dem jeweiligen Bereich der eingeschalteten Ausgangsspannung kann ein Fehler durch die bereits beschriebene Strommessmethode entdeckt werden.

Ein Drahtbruchfehler kann auf zwei unterschiedliche Arten entdeckt werden. Zum einen wird ein Drahtbruchfehler dadurch erkannt, dass ein Strom durch die jeweiligen Strompfade 5a und 5b gemessen wird und wenn der Strom einen Grenzwert unterschreitet, so liegt ein erster Indikator für einen Fehler vor. Da man sich aber nicht sicher sein kann, dass diese Stromwerteunterschreitung beispielsweise aufgrund von unterschiedlichen Lastströmen oder unterschiedlichen Lastspannungen zustande gekommen sind, wird gegensinnig von der Stromprüfung in der jeweils anderen Baugruppe ein Binärtest durchgeführt. Der Binärtest tastet im Wesentlichen den jeweiligen Ausgang der jeweiligen Baugruppe ab, und prüft ob an diesem Ausgang eine Spannung U1 oder U2 anliegt. Bei dem redundanten System, wobei die Last mit den beiden Ausgabebaugruppen 1,2 redundant, parallel verschaltet ist, muss in jedem Fall immer eine Spannung an den jeweiligen Ausgängen anliegen. Es ist dabei nicht die eigene Ausgangsspannung sondern durch die besondere Art der Verschaltung ist es die Ausgangsspannung der jeweiligen anderen Baugruppe, welche durch den Rückleseeingang ertastet wird.

Um bei redundant verschalteten Ausgabebaugruppen (1,2) einen möglichen Drahtbruch zu einer Last (3) sicher zu erkennen, wird vorgeschlagen, während eines Abschalttestes einer ersten Baugruppe in der jeweils anderen Baugruppe eine Stromprüfung durchzuführen und in der abgeschalteten Baugruppe einen Binärtest durchzuführen. Der Binärtest dient dazu, um zu sehen, ob die durch die jeweils andere Baugruppe angeschaltete Spannung auch über die entsprechenden Verbindungswege an die Baugruppe mit den Binärtests gelangen wird.

## Patentansprüche

1. Verfahren zum Betreiben eines redundanten System zur Versorgung einer Last (3) mit einer Spannung, wobei über
- einen ersten Ausgang (A1) einer ersten Ausgabebaugruppe (1) eine erste Ausgangsspannung (U1) und über
- einen zweiten Ausgang (A2) einer zweiten Ausgabebaugruppe (2) eine zweite Ausgangsspannung (U2) zum Ansteuern der Last (3) an diese parallel geschaltet wird, mit folgenden Schritten:
(i) in der ersten Ausgabebaugruppe (1) wird über ein zu dieser Ausgabebaugruppe (1) zugehöriges Messmittel (6) eine Prüfung eines ersten elektrischen Stromweges (5a) von dem ersten Ausgang (A1) über die Last (3) durchgeführt, und in der zweiten Ausgabebaugruppe (2) wird über ein zu dieser Ausgabebaugruppe (2) zugehöriges Messmittel (6) eine Prüfung eines zweiten elektrischen Stromweges (5b) von dem zweiten Ausgang (A2) über die Last (3) durchgeführt,
**dadurch gekennzeichnet, dass**
(ii) wenn die Prüfung ergibt, dass ein Messwert des Stromes des jeweiligen elektrischen Stromweges (5a,5b) unter einem Grenzwert liegt, so wird die Ausgangsspannung (U1,U2) der Ausgabebaugruppe (1,2), bei welcher durch das Prüfergebnis die Unterschreitung des Grenzwertes festgestellt wurde, abgeschaltet,
(iii) und mittels eines Rückleseeingangs (26a,26b), welcher mit dem ersten oder zweiten Ausgang (A1,A2) verbunden ist, wird in der Ausgabebaugruppe (1,2), in welcher die Ausgangsspannung (U1,U2) abgeschaltet wurde, ein Binärtest durchgeführt, welcher eine logische Eins liefert, wenn an ihrem Ausgang (A1, A2) noch eine Spannung anliegt, und eine logische Null liefert, wenn an ihrem Ausgang (A1, A2) keine Spannung anliegt,
(iv) bei dem Testergebnis Null wird eine Fehlermeldung erzeugt und bei dem Testergebnis Eins wird der Binärtest für eine vorgebbare Zeitdauer einer Wartezeit (TW) zyklisch fortgeführt, wobei innerhalb der Zeitdauer der Wartezeit (TW) die Ausgabebaugruppe (1,2) mit der noch eingeschalteten Ausgangsspannung (U1,U2) derart betrieben wird, dass ihre Ausgangsspannung (U1,U2) abgeschaltet wird,
wobei dieses Abschalten durch die Ausgabebaugruppe (1,2), welche den Binärtest durchführt, registriert wird und diese daraufhin ihre Ausgangsspannung (U1,U2) wieder einschaltet und dadurch über den an ihrem Ausgang (A1,A2) angeschlossenem elektrischen Stromweg (5a,5b) die Versorgung der Last (3) übernimmt, wobei mit dem dieser Ausgabebaugruppe (1) zugehörigen Messmittel (6) geprüft wird, ob ein Strom fließt und für den Fall, dass kein Strom fließt eine Fehlermeldung erzeugt wird.

2. Verfahren nach Anspruch 1, wobei die Prüfung des elektrischen Stromweges (5a,5b) mittels des zugehörigen Messmittels (6) wechselseitig durchgeführt wird.

3. Verfahren nach Anspruch 1 oder 2, wobei wechselseitig in einer der Ausgabebaugruppen die Prüfung mittels des Messmittels (6) und in der jeweils anderen Ausgabegruppe der Binärtest durchgeführt wird.

4. Verfahren nach einem der Ansprüche 1 bis 3, wobei durch die Prüfung des Stromes über den ersten bzw. zweiten elektrischen Stromweg (5a,5b) eine Drahtbruchprüfung einer ersten Verbindung (4a) bzw. einer dritten Verbindung (4c) bis zu einem ersten Lastanschluss (3a) über die Last (3) hinweg und einer zweiten Verbindung (4b) bzw. einer vierten Verbindung (4d), welche an einem zweiten Lastanschluss (3b) angeschlossen sind, durchgeführt wird.

5. System zur redundanten Versorung einer Last (3) mit einer Spannung, umfassend
- eine erste Ausgabebaugruppe (1) mit einem ersten Ausgang (A1), welcher über eine erste Verbindung (4a) an einen ersten Lastanschluss (3a) der Last (3) angeschlossen ist, wobei ein zweiter Lastanschluss (3b) der Last (3) über eine zweite Verbindung (4b) an einen Masseanschluss (2M) der ersten Ausgabebaugruppe (1) angeschlossen, ist, wobei diese Anschlussart einen ersten elektrischen Stromweg (5a) bildet,
- eine zweite Ausgabebaugruppe (2) mit einem zweiten Ausgang (A2), welcher über eine dritte Verbindung (4c) an den ersten Lastanschluss (3a) der Last (3) angeschlossen ist, und der zweite Lastanschluss (3b) über eine vierte Verbindung (4d) an einen Masseanschluss (2M) der zweiten Ausgabebaugruppe (1) angeschlossen ist, wobei diese Anschlussart einen zweiten elektrischen Stromweg (5b) bildet,
- je ein Messmittel (6) in den Ausgabebaugruppen(1,2) zur Prüfung eines Stromflusses über den ersten bzw. zweiten elektrischen Stromweg (5a, 5b) und zur Bereitstellung eines Messwertes,
- je ein Auswertemittel (31,32) zum Auswerten des Messwertes,
- je ein Schaltmittel (10) zum Schalten einer ersten Ausgangsspannung (U1) an den ersten Ausgang (A1) bzw. einer zweiten Ausgangsspannung (U2) an den zweiten Ausgang (A2),
**gekennzeichnet durch**
- je einen Rückleseeingang (26a,26b), welcher mit dem ersten Ausgang (A1) bzw. dem zweiten Ausgang (A2) verbunden ist,
wobei das jeweilige Auswertemittel (31,32) den jeweiligen Rückleseeingang (26a,26b) aufweist, und weiterhin dazu ausgestaltet ist, einen Binärtest durchzuführen, welcher eine logische Eins liefert, wenn am Ausgang (A1, A2) eine Spannung anliegt, und eine logische Null liefert, wenn am Ausgang (A1, A2) keine Spannung anliegt, bei dem Testergebnis Null wird eine Fehlermeldung erzeugt und bei dem Testergebnis Eins wird der Binärtest für eine vorgebbare Zeitdauer einer Wartezeit (TW) zyklisch fortgeführt, wobei innerhalb der Zeitdauer der Wartezeit (TW) die Ausgabebaugruppe (1,2) mit der noch eingeschalteten Ausgangsspannung (U1,U2) dazu ausgestaltet ist, dass ihre Ausgangsspannung (U1,U2) abgeschaltet wird,
wobei die Ausgabebaugruppe (1,2), welche den Binärtest durchführt, dazu ausgestaltet, ist dies zu registrieren und daraufhin ihre Ausgangsspannung (U1,U2) wieder einschaltet und dadurch die Versorgung der Last (3) übernimmt, wobei mit dem dieser Ausgabebaugruppe (1) zugehörigen Messmittel (6) geprüft wird, ob ein Strom fließt und für den Fall, dass kein Strom fließt eine Fehlermeldung erzeugt wird.

6. System nach Anspruch 5, wobei das Schaltmittel (10) in Verbindung mit dem Auswertemittel (31,32) derart ausgestaltet ist, dass das Abschalten der Ausgangsspannung (U1,U2) einem zeitlich vorbestimmten Verlauf folgt.

7. System nach Anspruch 6, wobei das Schaltmittel (10) in Verbindung mit dem Auswertemittel (31,32) derart ausgestaltet ist, dass die Fehlermeldung als eine Drahtbruchmeldung zu erkennen ist.

8. System nach Anspruch 7, ausgestaltet als ein fehlersicheres SPS-System.

## Claims

1. Method for operating a redundant system for supplying a load (3) with a voltage, whereby
- a first output voltage (U1) is connected via a first output (A1) of a first output module (1) and
- a second output voltage (U2) is connected via a second output (A2) of a second output module (2) to a load for controlling said load (3), with the following steps:
(i) in the first output module (1) a test of a first electrical current path (5a) is carried out by a measurement means (6) belonging to this output module (1) from the first output (A1) via the load (3) and in the second output module (2) a test of a second electrical current path (5b) from the second output (A2) via the load (3) is carried out by a measurement means (6) belonging to this output module (2),
**characterised in that**
(ii) if the result of the test is that a measured value of the current of the respective electrical current path (5a, 5b) lies below a threshold value, the output voltage (U1, U2) of the output module (1, 2) at which the undershooting of the threshold value was established by the test result is switched off,
(iii) and by means of a readback input (26a, 26b) which is connected to the first or second output (A1, A2) a binary test is carried out in the output module (1, 2) in which the output voltage (U1, U2) was switched off which delivers a logical one if a voltage is still present at its output (A1, A2) and delivers a logical zero if there is no voltage present at its output (A1, A2),
(iv) for the test result zero an error message is generated and for the test result one the binary test is continued in cycles for a predeterminable duration of a wait time (TW), whereby within the duration of the wait time (TW) the output module (1, 2) with the output voltage (U1, U2) still switched on is operated such that its output voltage (U1, U2) is switched off,
whereby this switching-off is registered by the output module (1, 2) which is carrying out the binary test and subsequently this switches on its output voltage (U1, U2) again and thereby takes over the supply of the load (3) via the electrical current path (5a, 5b) connected to its output (A1, A2), whereby a test is carried out by the measurement means (6) associated with this output module (1) as to whether a current is flowing and, in the event of no current flowing, an error message is generated.

2. Method according to claim 1, whereby the test of the electrical current path (5a, 5b) is carried out alternately by means of the associated measurement means (6).

3. Method according to claim 1 or 2, whereby the test is carried out alternately in one of the output modules by means of the measurement means (6) and the binary test is carried out in the respective other output module.

4. Method according to one of claims 1 to 3, whereby through the test of the current over the first or the second electrical current path (5a, 5b) a wire break test of a first connection (4a) or of a third connection (4c) up to a first load terminal (3a) beyond the load (3) and a second connection (4b) or a fourth connection (4d) which are connected to a second load terminal (3b), is carried out.

5. System for redundant supply of a load (3) with a voltage, comprising
- a first output module (1) with a first output (A1) which is connected via a first connection (4a) to a first load terminal (3a) of the load (3), whereby a second load terminal (3b) of the load (3) is connected via a second connection (4b) to a ground terminal (2M) of the first output module (1), whereby this type of connection forms a first electrical current path (5a),
- a second output module (2) with a second output (A2), which is connected via a third connection (4c) to the first load terminal (3a) of the load (3) and the second load terminal (3b) is connected via a fourth connection (4d) to a ground terminal (2M) of the second output module (1), whereby this connection type forms a second electrical current path (5b),
- a measurement means (6) in the output modules (1, 2) in each case for testing a current flow over the first or the second electrical current path (5a, 5b) and for providing a measured value,
- an evaluation means (31, 32) in each case for evaluating the measured value,
- a switching means (10) in each case for switching a first output voltage (U1) to the first output (A1) or a second output voltage (U2) to the second output (A2),
**characterised by**
- a readback input (26a, 26b) in each case which is connected to the first output (A1) or the second output (A2),
whereby the respective evaluation means (31, 32) has the respective readback input (26a, 26b) and is also embodied to carry out a binary test which delivers a logical one if there is a voltage present at the output (A1, A2) and delivers a logical zero if there is no voltage present at the output (A1, A2), for the test result zero an error message is generated and for the test result one the binary test is continued cyclically for a predeterminable duration of a wait time (TW), whereby within the duration of the wait time (TW), the output module (1, 2) with the output voltage (U1, U2) that is still switched on is embodied so that its output voltage (U1, U2) is switched off,
whereby the output module (1, 2) which is carrying out the binary test is embodied to register this test and subsequently switches on its output voltage (U1, U2) again and thereby takes over the supply of the load (3), whereby a test is carried out with the measurement means (6) belonging to this output module (1) as to whether a current is flowing and in the event of no current flowing an error message is generated.

6. System according to claim 5, whereby the switching means (10) is embodied in conjunction with the evaluation means (31, 32) such that the switching-off of the output voltage (U1, U2) follows a predefined time sequence.

7. System according to claim 6, whereby the switching means (10) is embodied in conjunction with the evaluation means (31, 32) such that the error message is to be detected as a wire break message.

8. System according to claim 7, embodied as a fault-tolerant PLC system.

## Revendications

1. Procédé pour faire fonctionner un système redondant d'application d'une tension à une charge (3), dans lequel on applique à la charge (3) pour la commander en parallèle
- par une première sortie (A1) d'un premier module (1) de sortie, une première tension (U1) de sortie et
- par une deuxième sortie (A2) d'un deuxième module (2) de sortie, une deuxième tension (U2) de sortie, comprenant les stades suivants :
(i) dans le premier module (1) de sortie, on effectue, par un moyen (6) de mesure associé à ce module (1) de sortie, un contrôle d'un premier trajet (5a) de courant électrique, de la première sortie (A1), en passant par la charge (3), et on effectue, dans le deuxième module (2) de sortie, par un moyen (6) de mesure associé à ce module (2) de sortie, un contrôle d'un deuxième trajet (5b) de courant électrique, de la deuxième sortie (A2), en passant par la charge (3),
**caractérisé en ce que**
(ii) lorsque le contrôle indique qu'une valeur de mesure du courant du trajet (5a, 5b) de courant électrique respectif est inférieur à une valeur limite, on cesse d'appliquer la tension (U1, U2) de sortie du module (1, 2) de sortie, pour lequel on a constaté, par le résultat du contrôle, que l'on est passé en dessous de la valeur limite,
(iii) et, au moyen d'une entrée (26a, 26b) de retour, qui est reliée à la première ou à la deuxième sortie (A1, A2), on effectue, dans le module (1, 2) de sortie, dans lequel la tension (U1, U2) de sortie a été déconnectée, un test binaire, qui fournit un un logique, s'il est appliqué encore une tension à sa sortie (A1, A2) et un zéro logique, s'il n'est pas appliqué de tension à sa sortie (A1, A2),
(iv) si le résultat du test est zéro, on produit un message d'erreur et si le résultat du test est un, on continue cycliquement le test binaire pendant un laps pouvant être donné à l'avance d'un temps (TW) d'attente, dans lequel, dans le laps du temps (TW) d'attente, on fait fonctionner le module (1, 2) de sortie à la tension (U1, U2) de sortie encore appliquée, de manière à ne pas appliquer sa tension (U1, U2) de sortie,
dans lequel on enregistre cette inapplication par le module (1, 2) de sortie, qui effectue le test binaire, et celui-ci réapplique ensuite sa tension (U1, U2)) de sortie et ainsi prend en charge, par le trajet (5a, 5b) de courant électrique raccordé à sa sortie (A1, A2), l'alimentation de la charge (3), dans lequel on contrôle, par le moyen (6) de mesure associé à ce module (1) de sortie, s'il passe un courant et, s'il n'en passe pas, on produit un message d'erreur.

2. Procédé suivant la revendication 1, dans lequel on effectue le contrôle du trajet (5a, 5b) de courant électrique réciproquement, à l'aide du moyen (6) de mesure associé.

3. Procédé suivant la revendication 1 ou 2, dans lequel on effectue réciproquement, dans l'un des modules de sortie, le contrôle, à l'aide du moyen (6) de mesure et, dans l'autre module de sortie, le test binaire.

4. Procédé suivant l'une des revendications 1 à 3, dans lequel on effectue, par le contrôle du courant passant par le premier et respectivement le deuxième trajet (5a, 5b) du courant électrique, un contrôle de rupture de fil d'une première liaison (4a) ou d'une troisième liaison (4c), jusqu'à une première borne (3a) de charge, au-delà de la charge (3), et d'une deuxième liaison (4b) ou respectivement d'une quatrième liaison (4d), qui sont raccordées à une deuxième borne (3b) de charge.

5. Système d'application redondante d'une tension à une charge (3), comprenant
- un premier module (1) de sortie, ayant une première sortie (A1), qui est connectée, par l'intermédiaire d'une première liaison (4a), à une première borne (3a) de la charge (3), une deuxième borne (3b) de la charge (3) étant connectée à une borne (2M) de masse du premier module (1) de sortie, par l'intermédiaire d'une deuxième liaison (4b), ce type de connexion formant un premier trajet (5b) de courant électrique,
- un deuxième module (2) de sortie, ayant une deuxième sortie (A2), qui est connectée à la première borne (3a) de la charge (3), par l'intermédiaire d'une troisième liaison (4c), et la deuxième borne (3b) de la charge (3) étant connectée à une borne (2M) de masse du deuxième module (1) de sortie, par l'intermédiaire d'une quatrième liaison (4d), ce type de connexion formant un deuxième trajet (5b) de courant électrique,
- respectivement un moyen (6) de mesure dans les modules (1, 2) de sortie, pour contrôler un flux de courant passant par le premier ou respectivement le deuxième trajet (5a, 5b) de courant électrique et pour mettre à disposition une valeur de mesure,
- respectivement un moyen (31, 32) d'exploitation, pour exploiter la valeur de mesure,
- respectivement un moyen (10) de commutation, pour la commutation d'une première tension (U1) de sortie sur la première sortie (A1) ou respectivement d'une deuxième tension (U2) de sortie sur la deuxième sortie (A2),
**caractérisé par**
- respectivement une entrée (26a, 26b) de retour, qui est reliée à la première sortie (A1) et respectivement à la deuxième sortie (A2),
dans lequel le moyen (31, 32) d'exploitation respectif a l'entrée (26a, 26b) de retour respective et est conformé en outre pour effectuer un test binaire, qui fournit un un logique, si une tension s'applique à la sortie (A1, A2) et un zéro logique, si une tension ne s'applique pas à la sortie (A1, A2), dans lequel on produit un message d'erreur, si le résultat du test est zéro et, si le résultat du test est un, on continue cycliquement le test binaire pendant un laps pouvant être donné à l'avance d'un temps (TW) d'attente, dans lequel, dans le laps du temps (TW) d'attente, le module (1, 2) de sortie, ayant la tension (U1, U2) de sortie qui y est encore appliquée, est conformé de manière à ne pas appliquer sa tension (U1, U2) de sortie,
dans lequel le module (1, 2) de sortie, qui effectue le test binaire, est conformé pour enregistrer celui-ci et ensuite sa tension (U1, U2) de sortie est réappliquée et ainsi il prend en charge l'alimentation de la charge (3), dans lequel, par le moyen (6) de mesure associé à ce module (1) de sortie, on contrôle si un courant passe et, s'il n'en passe pas, on produit un message d'erreur.

6. Système suivant la revendication 5, dans lequel le moyen (10) de commutation est conformé, en liaison avec le moyen (31, 32) d'exploitation, de manière à ce que l'inapplication de la tension (U1, U2) de sortie suive une courbe définie à l'avance dans le temps.

7. Système suivant la revendication 6, dans lequel le moyen (10) de commutation est conformé, en liaison avec le moyen (31, 32) d'exploitation, de manière à reconnaître le message d'erreur comme un message de rupture de fil.

8. Système suivant la revendication 7, conformé en système SPS sécurisé vis-à-vis d'une erreur.
